# EUROPÄISCHE PATENTSCHRIFT

(11) **EP 0 850 861 B1**
(45) Veröffentlichungstag und Bekanntmachung des Hinweises auf die Patenterteilung: **07.06.2000**
(21) Anmeldenummer: 97122710.3
(22) Anmeldetag: 23.12.1997
(51) Int. Cl.: B65G 39/16

(54) **Förderanlage**
Conveyor system
Installation de transport

(30) Priorität: 27.12.1996 AT 225896
(43) Veröffentlichungstag der Anmeldung: 01.07.1998
(73) Patentinhaber: Bernhard Beumer Maschinenfabrik KG, D-59269 Beckum (DE)
(72) Erfinder: Grimmer, Klaus Jürgen, Prof. Dr.-Ing., 8793 Trofaiach (AT)
(74) Vertreter: Hoormann, Walter, Dr.-Ing.

(56) Entgegenhaltungen:
- GB-A- 2 163 121
- PATENT ABSTRACTS OF JAPAN vol. 007, no. 104 (M-212), 6.Mai 1983 & JP 58 026708 A (HIROSHI TSUJI), 17.Februar 1983,

## Beschreibung

Die Erfindung betrifft eine kurvengängige Stetigförderanlage nach dem Oberbegriff des Anspruches 1, wie sie aus der GB 2 163 121A bekannt ist.

Bei dieser gattungsgemäßen Förderanlage ist das Rückstellmittel für eine im Bereich einer Horizontalkurve befindliche Tragrollenstation durch Federn oder ein gewichtsbelastetes Seil gebildet, welches (s.d. Fig. 3) am freien seitlichen Endabschnitt der an ihrem gegenüberliegenden Ende schwenkbar am Gerüst gelagerten Wippe angelenkt ist, und über eine Umlenkrolle mit einem am freien Ende der Seite befestigten Gewicht verbunden ist.

Bei einer aus der DE-PS 622 057 bekannten, rückbaren Förderanlage, die allerdings keine Kurven aufweist, sind die einzelnen Tragrollenstationen ebenfalls jeweils auf einer in Förderrichtung verlaufenden, unterhalb der Förderbahn liegenden Achse abgestützt. Infolge eines fehlenden Rückstellmittels der wippenartigen, quer zur Förderrichtung schwenkbaren Tragrollenstationen ergibt sich beim Lauf des Fördermittels durch eine Horizontalkurve als Folge der in Richtung Innenkurve wirkenden Kraftkomponente der Zugkraft im Fördermittel ein Abkippen der Rollenstationen in Richtung Innenkurve und somit ein Ablaufen des Fördermittels in dieser Richtung.

Für einen einwandfreien Betrieb der Förderanlage - und zwar nur für einen bestimmten Belade- und Betriebszustand - wäre es notwendig, die Tragrollenstation(en) jeweils auf der Schwenkachse drehfest zu fixieren oder Anschläge zur relativ engen Begrenzung ihrer Schwenkbewegung um die jeweils in Förderrichtung verlaufende Schwenkachse vorzusehen. Abgesehen davon, daß diese Maßnahme nicht vorgesehen ist, würde sich für andere Belade- und Betriebszustände der Förderanlage dennoch - insb. bei kleineren Radien der Horizontalkurve - entweder ein Ablaufen des Fördermittels in Richtung Innen- oder Außenkurve ergeben.

Für eine Förderanlage mit einem durch wenigstens eine Horizontalkurve geführten Förderweg ist diese bekannte Fördereinrichtung somit nicht geeignet, da sich je nach ihrem Belade- und Betriebszustand infolge der jeweils auftretenden Eigengewichts-, Flieh-, Reibungs- und insb. Zugkräfte im Fördermittel unterschiedliche Kraftkomponenten quer zur Laufrichtung des Fördermittels ergeben, die zur Erhaltung des Gleichgewichtes jeweils eine unterschiedliche Querneigung der Rollenstationen erfordern.

Bei einer aus der AT-PS 389 502 bekannten Förderanlage sind die Tragrollenstationen an einer oberhalb der Förderbahn angeordneten, in Förderrichtung verlaufenden Achse aufgehängt. Dadurch ergibt sich der Nachteil einer sehr aufwendigen Traggerüstkonstruktion sowie einer mangelnden Zugänglichkeit für das Fördergut, wenn dieses an verschiedenen Stellen der Förderbahn auf die Förderanlage aufgegeben werden soll. Darüber hinaus ist die Bauhöhe der Konstruktion verhältnismäßig groß und eine erschwerte Zugänglichkeit bei Wartungs- und Montagearbeiten gegeben.

Nach einem weiteren Merkmal dieser bekannten Förderanlage sind die Tragrollenstationen (bzw. deren Gestelle) im wesentlichen kreisbogenförmig ausgebildet und auf zwei in Querrichtung zur Förderbahn voneinander distanzierten Rollenböcken abgestützt, deren die Tragrollen tragenden Achsen im wesentlichen parallel zur Förderbahn ausgerichtet sind. Beim betrieblichen Einsatz einer solchen Tragrollenstation ergibt sich bei Verschmutzung und Korrosion der Nachteil sehr großer Laufwiderstände der Tragrollen, so daß die gewünschte Funktion einer freien Verschwenkbarkeit um eine in Förderrichtung verlaufende, oberhalb der Förderbahn liegende (imaginäre) Achse nicht mehr gegeben ist.

Der vorliegenden Erfindung liegt die Aufgabe zugrunde, die genannten Nachteile der bekannten gattungsgemäßen Förderanlage zu vermeiden, und eine Förderanlage der eingangs beschriebenen Gattung zu schaffen, bei der - unter Aufrechterhaltung des großen Vorteils, daß eine von der jeweiligen Belastung des oberen und/oder des unteren umlaufenden Fördertrums des Fördermittels abhängige Querneigung der Rollenstationen im Bereich von Horizontalkurven der Förderanlage in einer derartigen Weise sichergestellt wird, daß sich bei allen Betriebszuständen der Förderanlage ein stabiles Gleichgewicht der Tragrollenstationen selbsttätig einstellt und weder ein Ablaufen des Fördermittels (also z.B. des Fördergurtes) in Richtung Innenkurve noch in Richtung Außenkurve der Förderbahn erfolgt - eine herstellungsmäßig und betrieblich einfachere bzw. erheblich wartungsärmere und damit kostengünstigere und betriebssichere Rückstellung der in einer Horizontalkurve verschwenkten Tragrollenstation(en) erfolgt.

Die Lösung dieser Aufgabe erfolgt durch die kennzeichnenden Merkmale des Anspruches 1.

Bevorzugte Ausgestaltungen der vorliegenden Erfindung sind in den Unteransprüchen beschrieben.

Die Erfindung wird nachstehend an Ausführungsbeispielen unter Bezugnahme auf eine Zeichnung weiter erläutert. Es zeigt:
- Fig. 1: Eine Draufsicht auf eine als Gurtförderer ausgebildete Förderanlage, und
- Fig. 2: einen Schnitt durch die Förderanlage gemäß Fig. 1 in Richtung der Schnittlinie II-II gesehen.

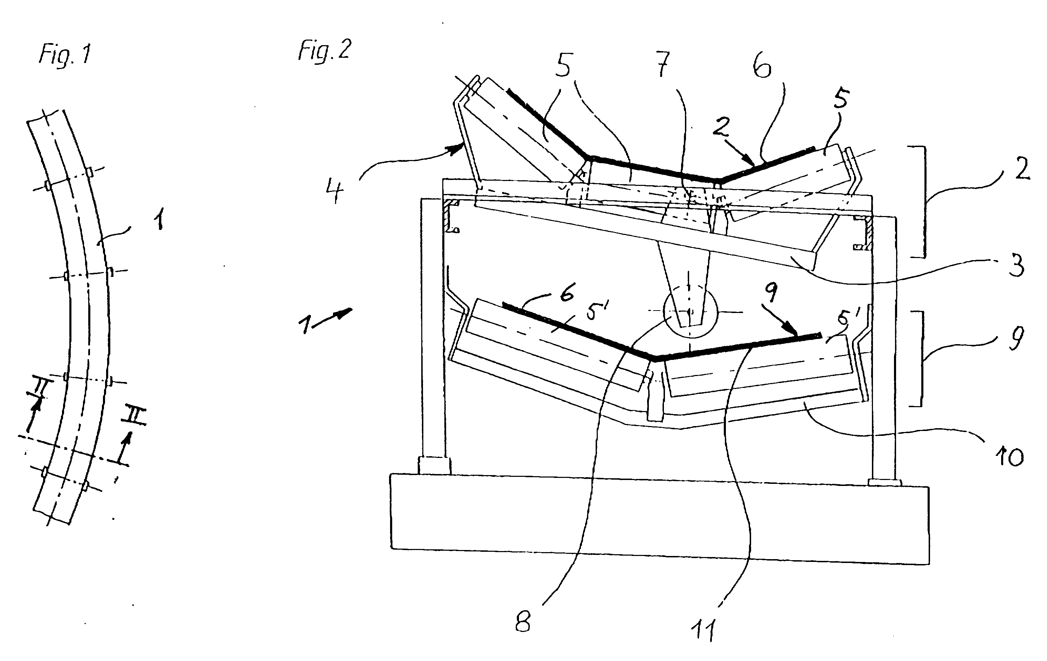

Die Förderanlage gemäß Fig. 1 weist auf ihrer Förderbahn eine Horizontalkurve auf, d.h. die Förderbahn verläuft in einer in einer horizontalen Ebene liegenden Krümmung.

Fig. 2 zeigt im Obertrum 2 des Fördergurtes der Förderanlage eine auf einer Wippe 3 gelagerte Tragrollenstation 4, deren Tragrollen 5 den oberen Teil des umlaufenden Fördergerätes (= Obertrum) abstützt. Die in Förderrichtung verlaufende (Verschwenk-)Achse 7 der Wippe 3 ist unterhalb der Förderbahn des Obertrums 6 angeordnet und gestattet in Abhängigkeit vom jeweiligen Betriebszustand der Förderanlage, wie z.B. Leerlauf, Teillast, Vollast usw., eine sich selbsttätig einstellende Querneigung der Wippe 3 in Abhängigkeit von den auftretenden Eigengewichts-, Flieh-, Reibungs- und insb. Zugkräften im Fördergurt, da das Gegengewicht 8 der auf der Wippe 3 gelagerten Tragrollenstation 4 bei allen Betriebszuständen der Förderanlage ein stabiles Gleichgewicht der Wippe 3 bewirkt. Durch die sich selbsttätig in Abhängigkeit vom jeweiligen Betriebszustand der Förderanlage einstellende Querneigung der Wippe 3 wird erreicht, daß weder ein Ablaufen des Fördergurtes 6 in Richtung Innenkurve noch in Richtung Außenkurve der Förderbahn erfolgt.

Im Untertrum 9 der Förderanlage ist in Fig. 2 eine einseitig angehobene, feste Tragrollenstation 10 vorgesehen, die den leeren, rücklaufenden, unteren Teil des Fördergurtes (= Untertrum 11) der Förderanlage abstützt. Im Bedarfsfall kann die Tragrollenstation 10 im Untertrum 9 der Förderanlage (statt fest) in gleicher Weise wie im Obertrum 2 auf einer gegengewichtsbelasteten Wippe 3 mit in Förderrichtung verlaufender (Verschwenk-)Achse 7 gelagert werden.

### Bezugszeichenliste

- 1: (Stetig-)Förderanlage
- 2: Obetrum (von 6)
- 3: Wippe
- 4: Tragrollenstation (Obertrum-)
- 5: Tragrollen (von 4)
- 6: Fördergurt
- 7: Achse (von 3)
- 8: Gegengewicht
- 9: Untertrum (von 6)
- 10: Tragrollenstation (Untertrum-)

## Patentansprüche

1. Kurvengängige Stetigförderanlage (I) mit einer durch wenigstens eine Horizontalkurve geführten Förderbahn, mit einem umlaufenden Fördermittel, wie z.B. einem Fördergurt (6) od. dgl., welches im Bereich der wenigstens einen Horizontalkurve durch mindestens eine um eine in Förderrichtung verlaufende, unterhalb der Förderbahn des betreffenden Trums (2 bzw. 9) liegende Schwenkachse (7) verschwenkbare Tragrollenstation (4 bzw. 10) mit wenigstens einer Tragrolle (5 bzw. 5') abgestützt ist, deren wenigstens eine Tragrolle (5; 5') auf wenigstens einer im wesentlichen quer zur Förderrichtung verlaufenden Achse drehbar gelagert ist, wobei die mindestens eine Tragrollenstation (4) mit einem Rückstellmittel (8) versehen ist, mittels dessen eine sich im Bereich der betreffenden Horizontalkurve einstellende Auslenkung der Tragrollenstation aus ihrer normalen Förderstellung um ihre Schwenkachse (7) selbsttätig so zu begrenzen ist, daß vorzugsweise in allen Betriebszuständen der Förderanlage weder ein Ablaufen des Fördermittels, z.B. des Fördergurtes (6), in Richtung der Innenkurve noch in Richtung der Außenkurve erfolgt, dadurch gekennzeichnet, daß die mindestens eine Tragrollenstation (4; 10) auf einer Wippe (3) gelagert ist; und daß das Rückstellmittel fest als mit der Wippe (3) verbundenes, unterhalb der Schwenkachse (7) angeordnetes Gegengewicht (8) ausgebildet ist.

2. Förderanlage nach Anspruch 1, dadurch gekennzeichnet, daß das Gegengewicht (8) der wenigtens einen im Bereich einer Horizontalkurve angeordneten Tragrollenstation (4 bzw. 10) in die Wippe (3) und/oder die Tragrollenstation (4 bzw. 10) selbst integriert ist.

3. Förderanlage nach Anspruch 1 oder 2, dadurch gekennzeichnet, daß der Bewegungswinkel der Wippe (3) mit dem an ihr angeordneten Gegengewicht (8) um die zugehörige Schwenkachse (7) durch wenigstens einen Anschlag begrenzt ist.

4. Förderanlage nach einem oder mehreren der vorhergehenden Ansprüche, dadurch gekennzeichnet, daß in einem nicht mit Fördergut zu beauschlagenden Trum (9) des Fördermittels (6) ebenfalls wenigstens eine auf einer Wippe (3) mit Gegengewicht (8) gelagerte, verschwenkbare Tragrollenstation (10) vorgesehen ist.

5. Förderanlage nach einem oder mehreren der vorhergehenden Ansprüche, dadurch gekennzeichnet, daß die mindestens eine Tragrollenstation (10) eines mit Fördergut zu beaufschlagenden Trums des endlos umlaufenden Fördermittels (6), i.a. des Obertrums, in bekannter Weise mehrere Tragrollen (5; 5') aufweist.

6. Förderanlage nach Anspruch 5, dadurch gekennzeichnet, daß die Tragrollen (5; 5') einer Tragrollenstation (10) in bekannter Weise gemuldet sind.

## Claims

1. A curve-negotiating continuous flow conveyor installation (1) comprising a conveyor path guided through at least one horizontal curve, comprising a rotating conveyor means, for example a conveyor belt (6) or the like, which, in the region of the at least one horizontal curve, is supported by at least one support roller station (4; 10), which is pivotable about a pivot axis (7) extending in the conveying direction and lying beneath the conveying path of the associated run (2; 9), the said station having at least one support roller (5; 5'), the at least one support roller (5; 5') being mounted for rotation on at least one spindle extending substantially transversely of the conveying direction, the at least one support roller station (4) being provided with a resetting means (8) by means of which a deflection of the support roller station out of its normal conveying position about its pivot axis (7) occurring in the region of the associated horizontal curve can be automatically so limited that there is neither any running off of the conveyor means, e.g. the conveyor belt (6), in the direction of the inner curve nor in the direction of the outer curve, preferably in every state of operation of the conveyor installation, characterised in that the at least one support roller station (4; 10) is mounted on a rocker (3); and in that the resetting means is constructed in the form of a counterweight (8) which is connected to the rocker (3) and disposed beneath the pivot axis (7).

2. A conveyor installation according to claim 1, characterised in that the counterweight (8) of the at least one support roller station (4; 10) disposed in the region of a horizontal curve is integrated in the rocker (3) and/or the support roller station (4; 10) itself.

3. A conveyor installation according to claim 1 or 2, characterised in that the angle of movement of the rocker (3) with the counterweight (8) disposed thereon about the associated pivot axis (7) is limited by at least one stop.

4. A conveyor installation according to any one or more of the preceding claims, characterised in that at least one pivotable support roller station (10) mounted on a rocker (3) with a counterweight (8) is also provided in a run (9) of the conveyor means (6) which is not to be occupied by material being conveyed.

5. A conveyor installation according to any one or more of the preceding claims, characterised in that the at least one support roller station (10) of a run of the endlessly rotating conveyor means (6) which is to be occupied by a material for conveying, inter alia the top run, comprises a plurality of support rollers (5; 5') in known manner.

6. A conveyor installation according to claim 5, characterised in that the support rollers (5; 5') of a support roller station (10) are troughed in known manner.

## Revendications

1. Installation de convoyage continu en courbe (1), comprenant une bande convoyeuse qui emprunte au moins une courbe horizontale et qui comporte un moyen de convoyage sans fin, comme par exemple une courroie convoyeuse (6) ou analogue, lequel est soutenu, dans la zone de la courbe horizontale au nombre d'au moins une par au moins une station à rouleaux porteurs (4 et, respectivement, 10) qui comporte au moins un rouleau porteur (5 et, respectivement, 5'), qui peut pivoter autour d'un axe de pivotement (7) orienté dans la direction de convoyage et situé au-dessous de la bande convoyeuse du brin correspondant (2 et, respectivement, 9) et dont le rouleau porteur (5 ; 5') au nombre d'au moins un est monté en rotation sur au moins un axe orienté sensiblement transversalement à la direction de convoyage, la station à rouleaux porteurs (4) au nombre d'au moins une étant munie d'un moyen de rappel (8) qui, dans la zone de la courbe horizontale concernée, permet de limiter automatiquement une déviation de la station à rouleaux porteurs autour de son axe de pivotement (7) par rapport à sa position normale de convoyage, de façon que, de préférence dans tous les états de fonctionnement de l'installation de convoyage, il ne se produise pas de dérapage du moyen de convoyage, par exemple de la courroie convoyeuse (6), vers l'intérieur ni vers l'extérieur de la courbe, caractérisée en ce que la station à rouleaux porteurs (4 ; 10) au nombre d'au moins une est montée sur un berceau (3), et en ce que le moyen de rappel est conçu sous la forme d'un contrepoids (8) solidarisé au berceau (3) et disposé au-dessous de l'axe de pivotement (7).

2. Installation de convoyage selon la revendication 1, caractérisée en ce que le contrepoids (8) de la station à rouleaux porteurs (4 et, respectivement, 10) au nombre d'au moins une située dans la zone d'une courbe horizontale est intégré au berceau (3) et/ou à la station à rouleaux porteurs proprement dite (4 et, respectivement, 10).

3. Installation de convoyage selon la revendication 1 ou 2, caractérisée en ce que l'angle de déplacement du berceau (3) muni du contrepoids (8) autour de l'axe de pivotement correspondant (7) est limité par au moins une butée.

4. Installation de convoyage selon une ou plusieurs des revendications précédentes, caractérisée en ce qu'au moins une station à rouleaux porteurs (10) pivotante montée sur un berceau (3) à contrepoids (8) est également prévue au niveau d'un brin (9) du moyen de convoyage (6) qui n'est pas appelé à recevoir des produits convoyés.

5. Installation de convoyage selon une ou plusieurs des revendications précédentes, caractérisée en ce que, de manière connue, la station à rouleaux porteurs (10), au nombre d'au moins une, d'un brin du moyen de convoyage sans fin (6) appelé à recevoir des produits convoyés, c'est-à-dire du brin supérieur, comporte plusieurs rouleaux porteurs (5 ; 5').

6. Installation de convoyage selon la revendication 5, caractérisée en ce que, de manière connue, les rouleaux porteurs (5 ; 5') d'une station à rouleaux porteurs (10) sont conformés en auge.
